# EUROPÄISCHE PATENTSCHRIFT

(11) **EP 1 506 104 B1**
(45) Veröffentlichungstag und Bekanntmachung des Hinweises auf die Patenterteilung: **01.09.2010**
(21) Anmeldenummer: 03714636.2
(22) Anmeldetag: 14.02.2003
(51) Int. Cl.: B60Q 1/26, B60R 1/12

(54) **LEUCHTEINHEIT, INSBESONDERE ALS ZUSATZLEUCHTE IN AUSSENR CKB LICKSPIEGELN VON KRAFTFAHRZEUGEN**
LUMINOUS UNIT, PARTICULARLY AS AN ADDITIONAL LIGHT IN SIDEVIEW MIRRORS OF MOTOR VEHICLES
UNITE LUMINEUSE, SERVANT EN PARTICULIER DE DISPOSITIF D'ECLAIRAGE SUPPLEMENTAIRE DANS DES RETROVISEURS EXTERIEURS DE VEHICULES AUTOMOBILES

(30) Priorität: 14.03.2002 DE 10211189
(43) Veröffentlichungstag der Anmeldung: 16.02.2005
(73) Patentinhaber: odelo GmbH, 71409 Schwaikheim (DE)
(72) Erfinder: KLETT, Thomas, 72810 Gomaringen (DE); ERBER, Andreas, 73760 Ostfildern (DE); WALDMANN, Bernd, 72622 Nürtingen (DE); STRAHL-SCHÄFER, Stephanie, 72764 Reutlingen (DE)
(74) Vertreter: Meyer, Thorsten
(86) Internationale Anmeldenummer: PCT/DE2003/000444
(87) Internationale Veröffentlichungsnummer: WO 2003/078203

(56) Entgegenhaltungen:
- DE-A- 19 646 042
- DE-A- 19 937 852
- DE-U- 20 013 330
- DE-U- 29 708 858

## Beschreibung

Die Erfindung betrifft eine Leuchteinheit, insbesondere als Zusatzleuchte in Außenrückblickspiegeln von Kraftfahrzeugen, nach dem Oberbegriff des Anspruches 1.

Es sind Leuchteinheiten bekannt, bei denen zur seitlichen Abstrahlung des Lichts schräg angeordnete LEDs vorgesehen sind. Diese LEDs sind auf gesonderten Blechträgern, sogenannten Clinchblechen, Leiterfolien oder Leiterplatinen befestigt. Die Verwendung solcher Träger und die Befestigung der LEDs auf ihnen ist relativ aufwendig und teuer.

Durch die DE 297 08 858 U1 ist ein Leuchtmittel mit einer in dessen Strahlengang angeordneten Linse bekannt. Die Linse weist im Bereich einer in dem Strahlengang liegenden Frontseite eine total reflektierende Fläche auf, an der die Strahlen infolge Totalreflexion zumindest teilweise zur Seite reflektiert werden. Die Linse ist Bestandteil einer über das Leuchtmittel gestülpten Kappe. Die total reflektierende Fläche ist konisch ausgebildet, wobei die Konusspitze dem Leuchtmittel zugewandt ist.

Durch die DE 200 13 330 U1 ist eine Leuchteinheit, insbesondere als Zusatzblinkleuchte in Außenrückspiegeln von Kraftfahrzeugen bekannt, mit mindestens einer LED und mindestens einem Reflektor, der die von der LED kommenden Strahlen in Richtung auf eine Lichtscheibe reflektiert. In dem Strahlengang der von der LED ausgehenden Strahlen ist ein Reflektorelement mit einer der LED zugewandten total reflektierenden Fläche angeordnet, welche zumindest einen Teil der von der LED nach vorn in Richtung der Lichtscheibe abgegebenen Strahlen zum Reflektor reflektiert. Dabei ist vorgesehen, dass die Reflektorelemente einzeln am jeweils zugehörigen Reflektor befestigt oder einstückig mit dem Reflektor ausgebildet sind, oder dass die Reflektorelemente direkt an der Lichtscheibe ausgebildet sind, oder dass die Reflektorelemente durch einen streifenförmigen Träger miteinander verbunden sind, oder einstückig mit einem mehrere Reflektorelemente verbindenden Träger ausgebildet sind.

Durch die DE 199 37 852 A1 ist eine Leuchteinheit mit mehreren LEDs als Leuchtmittel bekannt. Jede LED kann frontwärtig mit einer Sammellinse oder mit einer Streulinse ausgestattet sein, welche unverspiegelt oder zumindest teilweise verspiegelt ist und Strahlung entweder in frontaler Richtung gebündelt, oder seitlich in Richtung eines gegebenenfalls vorhandenen Reflektors reflektiert. Die LED kann eine verspiegelte oder unverspiegelte frontwärtige konkave Wölbung aufweisen, welche einen größeren Teil der Strahlung auf den gegebenenfalls vorhandenen Reflektor abstrahlt. Eine gegebenenfalls als Reflektor ausgebildete Trägerplatte, auf der die LEDs angeordnet sind, kann von einer Sammel- oder Streulinse abgedeckt sein. Jede LED weist selbst einen Reflektor auf oder ist in einem die Strahlung auf ein Ziel richtenden Reflektor angeordnet.

Durch die DE 196 46 042 A1 ist eine Leuchteinheit mit mehreren LEDs bekannt, von denen einige in einem Abschnitt geneigt gegenüber einer Hauptabstrahlrichtung der Leuchteinheit angeordnet sind. Zumindest einem Teil der LEDs ist jeweils einer LED ein Umlenkelement zugeordnet, durch das zumindest ein Teil des von der jeweiligen LED ausgesandten Lichts derart umgelenkt wird, dass es für die Lichtabgabe der Leuchteinheit in deren Hauptabstrahlrichtung nutzbar ist.

Der Erfindung liegt die Aufgabe zugrunde, eine Leuchteinheit dieser Art so auszubilden, dass das Leuchtmittel zur seitlichen Abstrahlung auf einfache kostengünstige Weise unter Vermeidung zusätzlicher Träger angeordnet werden kann.

Diese Aufgabe wird bei einer Leuchteinheit der gattungsbildenden Art erfindungsgemäß mit den kennzeichnenden Merkmalen des unabhängigen Anspruchs 1 bzw. mit den kennzeichnenden Merkmalen des unabhängigen Anspruchs 2 gelöst.

Da das Leuchtmittel mit der total reflektierenden Fläche versehen ist, gelangt das Licht in diesem Bereich nicht nach außen. Das Leuchtmittel muss darum nur so eingebaut werden, dass das Licht in der gewünschten Richtung austritt, insbesondere in seitlicher Richtung. Am Reflektor werden die Strahlen dann zur Lichtscheibe reflektiert. Das Leuchtmittel kann infolge der total reflektierenden Fläche so angeordnet werden, dass je nach Einsatzteil der erfindungsgemäßen Leuchteinheit das Licht in die gewünschte Richtung fällt. Das Leuchtmittel muss nicht schräg eingebaut werden, so dass zusätzliche Bleche, Leiterfolien oder-platinen nicht mehr erforderlich sind. Dadurch läßt sich die Leuchteinheit einfach und kostengünstig herstellen.

Weitere Merkmale der Erfindung ergeben sich aus den weiteren Ansprüchen, der Beschreibung und den Zeichnungen.

Die Erfindung wird nachstehend anhand dreier in den Zeichnungen dargestellter Ausführungsbeispiele näher beschrieben. Es zeigt:
- Fig. 1: im Längsschnitt eine erfindungsgemäße Leuchteinheit,
- Fig. 2: in vergrößerter Darstellung einen Teil der erfindungs- gemäßen Leuchteinheit mit einer LED,
- Fig. 3 und 4: in Darstellungen entsprechend Fig. 2 weitere Ausführungsformen von erfindungsgemäßen Leuchteinheiten.

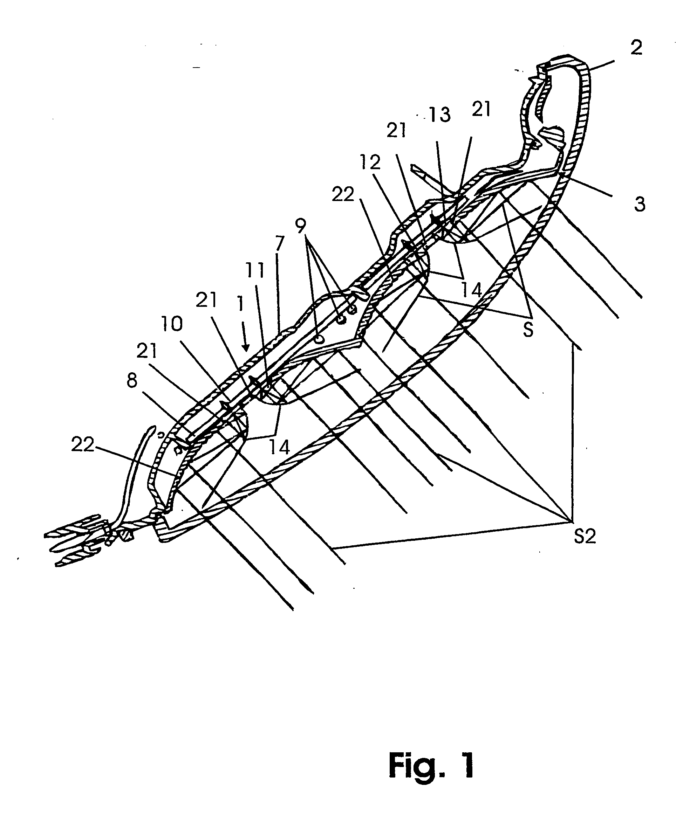

Fig. 1 zeigt eine Leuchteinheit mit einem Gehäuse 1, dessen Gehäuseöffnung mit einer Lichtscheibe 2 abgedeckt ist. Im Gehäuse 1 ist ein der Lichtscheibe 2 mit Abstand gegenüberliegender Reflektor 3 vorgesehen, dessen Innenseite mit einzelnen Reflektorflächen 5, 6 versehen ist, an denen Strahlen S von Leuchtmitteln 10 bis 13 zur Lichtscheibe 2 reflektiert werden. Zwischen der Gehäuserückwand 7 und dem Reflektor 3 liegt eine Leiterplatine 8, die die Leuchtmittel 10 bis 13 sowie weitere elektronische Bauteile, wie Widerstände 9, trägt.

Die Leuchtmittel 10 bis 13 sind LEDs, die auf die Leiterplatine 8 aufgelötet, aufgeschweißt oder auf sonstige Weise auf ihr befestigt sind. Die Leuchteinheit weist mehrere, mit Abstand hintereinander liegende Leuchtmittel 10 bis 13 auf. Je nach Ausbildung der Leuchteinheit können die Leuchtmittel auch in anderer Anordnung vorgesehen sein.

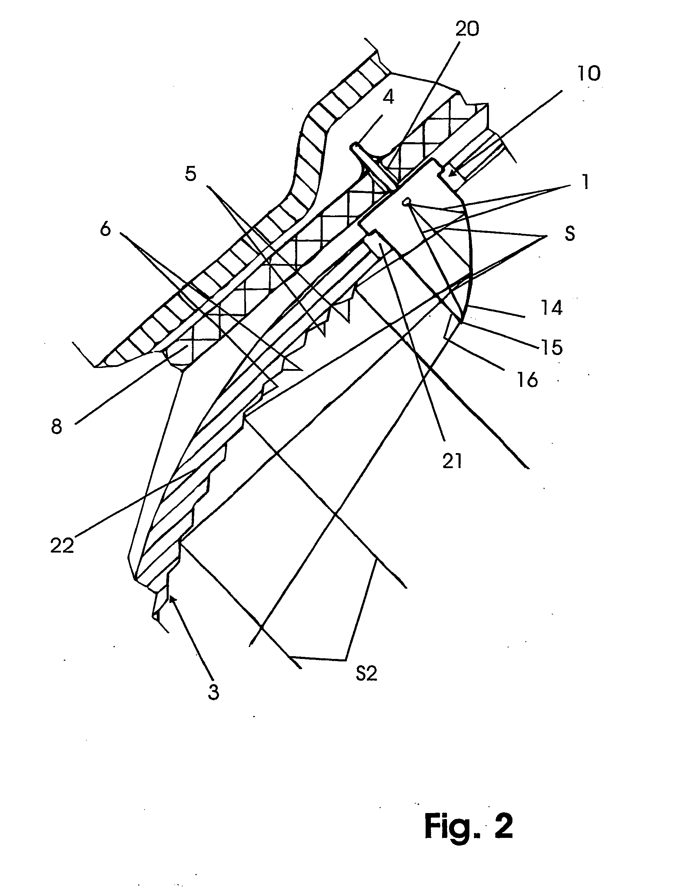

Anhand von Fig. 2 wird die Ausbildung und Lage eines der Leuchtmittel in bezug zum Reflektor 3 näher beschrieben. Die anderen Leuchtmittel sind in gleicher Weise ausgebildet und relativ zum Reflektor 3 angeordnet.

Die LED 10 hat Füße 4, die durch Öffnungen 20 in der Leiterplatine 8 ragen und vorteilhaft durch Löten an (nicht dargestellte) Leiterbahnen angeschlossen sind. Der Reflektor 3 ist mit einer Durchtrittsöffnung 21 versehen, durch die die LED 10 ragt. Sie hat eine im Längsschnitt konvex nach außen gewölbte Stirnseite 14, an der die von der LED 10 in Richtung auf diese Stirnseite 14 gehenden Strahlen S1 total reflektiert werden. Die Stirnseite 14 kann hierfür innenseitig verspiegelt sein. Wie Fig. 2 zeigt, schließt die Stirnseite 14 am axial äußeren Ende spitzwinklig und am axial inneren Ende stumpfwinklig an die Mantelfläche 16 an, die auf dem Mantel eines Zylinders liegen kann. In diesem Fall hat die LED 10, in Achsrichtung auf die Stirnseite 14 gesehen, kreisförmigen Umriß. Die Stirnseite 14 erstreckt sich vom freien Ende 15 der LED 10 über mehr als deren halbe Höhe.

Die an der Stirnseite 14 reflektierten Strahlen S1 werden dabei in entgegengesetzter Richtung so abgelenkt, daß sie durch die Mantelfläche 16 hindurchtreten und auf die schräg zu ihr verlaufenden Reflektorflächen 6 treffen. Sie liegen auf Teilringen, die koaxial zur Mittelachse des Reflektors 3 liegen. Der die Reflektorfläche 5, 6 aufweisende Teil 22 des Reflektors 3 ist etwa parabelförmig ausgebildet. Die Reflektorflächen 6 sind so ausgebildet, daß die Strahlen S1 etwa parallel zueinander zur Lichtscheibe 2 reflektiert werden. Die reflektierten Strahlen S2 treffen etwa senkrecht auf die Lichtscheibe 2 (Fig. 1).

Anstelle der Verspiegelung kann zur Erzielung einer Totalreflexion die Stirnseite 14 der LED 10 innenseitig mit einer Beschichtung oder dergleichen versehen sein. Die Stirnseite 14 kann aber auch aus einem total reflektierenden Material bestehen, während die Mantelfläche 16 aus lichtdurchlässigem Material besteht.

Wie Fig. 1 zeigt, besteht der Reflektor 3 aus zwei gleichen Reflektorteilen 22, die vorteilhaft einstückig miteinander ausgebildet sind. Jeder Reflektorteil 22 hat zwei mit Abstand nebeneinander liegende Durchtrittsöffnungen 21, durch die jeweils eine LED 10, 11 und 12, 13 ragt. Innerhalb jedes Reflektorteiles 22 sind die beiden LEDs 10, 11 und 12, 13 so spiegelbildlich zueinander angeordnet, daß die total reflektierenden Stirnseiten 14 einander zugewandt sind. Dadurch strahlen die LEDs 10 und 11 bzw. 12 und 13 in entgegengesetzter Richtung Licht ab. Die von den LEDs 10 und 12 ausgehenden Strahlen treffen auf die Reflektorfläche 6 und die von den LEDs 11 und 13 ausgesandten Strahlen auf die gegensinnig geneigten Reflektorflächen 5.

Aufgrund der beschriebenen Ausbildung müssen die LEDs 10 bis 13 für die seitliche Abstrahlung des Lichtes nicht schräg angeordnet werden. Eine zusätzliche Leiterplatine, ein Zusatzblech und dergleichen für die LEDs 10 bis 13 kann eingespart werden. Die LEDs 10 bis 13 können in einem üblichen Lötprozeß auf der Leiterplatine 8 befestigt werden, so daß die Leuchteinheit einfach und kostengünstig hergestellt werden kann.

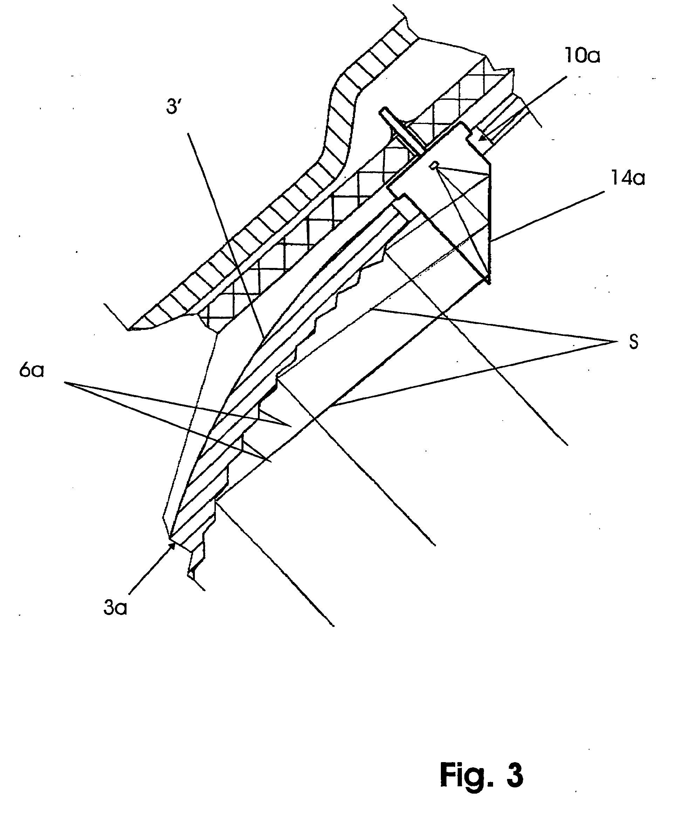

Wie Fig. 3 zeigt, kann die LED 10a auch so ausgebildet sein, daß die total reflektierende Stirnseite 14a eben ausgebildet ist und winklig zur Längsachse der LED 10a liegt. In diesem Fall werden die Strahlen S im Unterschied zur vorigen Ausführungsform parallel zueinander an der Stirnseite 14a reflektiert. Die reflektierten Strahlen werden an den Reflektorflächen 6a zur Lichtscheibe 2 reflektiert.

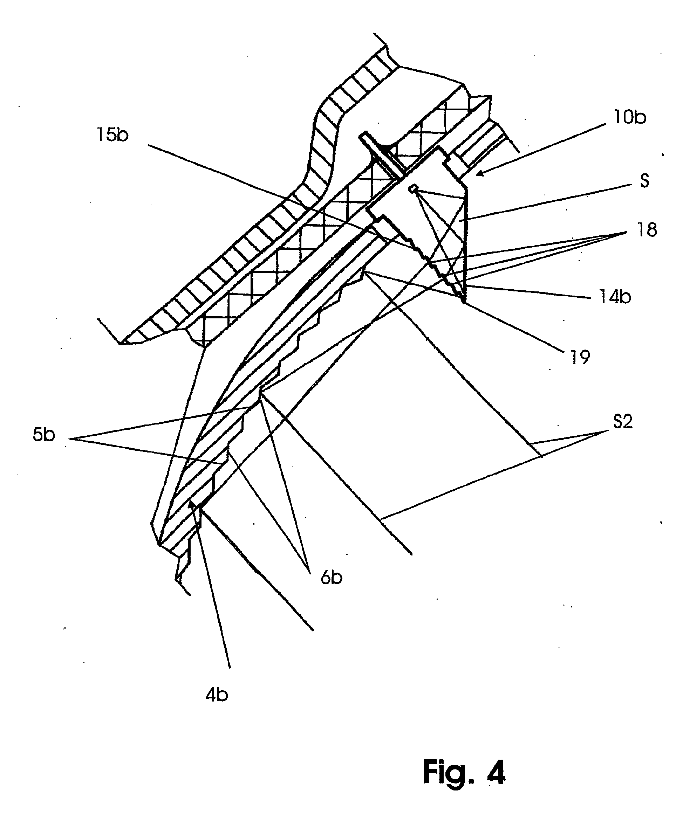

Bei der Ausführungsform gemäß Fig. 4 hat die LED 10b die geneigte Stirnseite 14b entsprechend dem Ausführungsbeispiel nach Fig. 3. Die Mantelfläche 15b ist in dem Bereich, in dem die an der Stirnseite 14b total reflektierten Strahlen S aus der LED nach außen treten, mit einer Brechungsoptik versehen. Beim Durchtritt durch die Brechungsoptik 18 werden die Strahlen S so gebeugt, daß sie auf die Reflektorflächen 6b fallen. Wie bei den anderen Ausführungsformen liegen die Reflektorflächen 5b im Schatten der Strahlen S. Die an den Reflektorflächen 6b reflektierten Strahlen S2 treffen auf die Lichtscheibe 2, durch welche sie aus der Leuchteinheit austreten. Die Strahlen S treten unter unterschiedlichen Winkeln aus der LED 10b aus und werden an den Reflektorflächen 6b parallel zueinander reflektiert. Es ist auch möglich, die Anordnung so zu treffen, daß die Strahlen S leicht gestreut werden.

Es ist ohne weiteres möglich, die LEDs gemäß den Fig. 1 bis 4 gemischt in der Leuchteinheit vorzusehen. Auch ist es möglich, die Brechungsoptik 18 bei der LED 10 gemäß Fig. 1 und 2 vorzusehen. Die Leuchteinheit läßt sich auf diese Weise optimal an den Einsatzfall anpassen.

Die Leuchteinheit wird vorteilhaft als Zusatzleuchte in Außenrückblickspiegeln von Kraftfahrzeugen eingesetzt. Sie kann aber selbstverständlich auf allen Gebieten der Signal- bzw. Beleuchtungstechnik eingesetzt werden.

## Patentansprüche

1. Leuchteinheit, insbesondere als Zusatzblinkleuchte in Außenrückspiegeln von Kraftfahrzeugen, mit mindestens einer LED (10, 11, 12, 13; 10a; 10b), und mindestens einem Reflektor, der die von der LED (10, 11, 12, 13; 10a; 10b) kommenden Strahlen in Richtung auf eine Lichtscheibe reflektiert, wobei die LED (10, 11, 12, 13; 10a; 10b) mindestens eine total reflektierende Fläche (14, 14a, 14b) aufweist, an der die Strahlen zum Reflektor (3) reflektiert werden,
**dadurch gekennzeichnet, dass** die total reflektierende Fläche (14, 14a, 14b) schräg zur Achse der LED (10, 11, 12, 13; 10a; 10b) liegt und die total reflektierende Fläche (14a; 14b) eben ausgeführt ist.

2. Leuchteinheit, insbesondere als Zusatzblinkleuchte in Außenrückspiegeln von Kraftfahrzeugen, mit mindestens einer LED (10, 11, 12, 13; 10a; 10b), und mindestens einem Reflektor, der die von der LED (10, 11, 12, 13; 10a; 10b) kommenden Strahlen in Richtung auf eine Lichtscheibe reflektiert, wobei die LED (10, 11, 12, 13; 10a; 10b) mindestens eine total reflektierende Fläche (14, 14a, 14b) aufweist, an der die Strahlen zum Reflektor (3) reflektiert werden,
**dadurch gekennzeichnet, dass** die total reflektierende Fläche (14, 14a, 14b) schräg zur Achse der LED (10, 11, 12, 13; 10a; 10b) liegt, und die total reflektierende Fläche (14) konvex nach außen gewölbt ist.

3. Leuchteinheit nach Anspruch 1 oder 2,
**dadurch gekennzeichnet, dass** die reflektierende Fläche (14; 14a; 14b) eine reflektierende Beschichtung und/oder Verspiegelung aufweist und/oder aus einem reflektierenden Material besteht.

4. Leuchteinheit nach Anspruch 1, 2 oder 3,
**dadurch gekennzeichnet, dass** sich die total reflektierende Fläche (14, 14a, 14b) über einen Teil der Höhe der LED (10, 11, 12, 13; 10a; 10b) erstreckt.

5. Leuchteinheit nach einem der vorhergehenden Ansprüche,
**dadurch gekennzeichnet, dass** die total reflektierende Fläche (14, 14a, 14b) die Strahlen quer zur Achse der LED (10, 11, 12, 13; 10a; 10b) reflektiert.

6. Leuchteinheit nach einem der vorhergehenden Ansprüche,
**dadurch gekennzeichnet, dass** die Mantelfläche (16, 16b) des Leuchtmittels (10, 11, 12, 13; 10a; 10b) im Bereich der durch sie hindurchgehenden, an der total reflektierenden Fläche (14; 14a; 14b) reflektierten Strahlen mit einer Brechungsoptik (18) versehen ist.

7. Leuchteinheit nach Anspruch 6,
**dadurch gekennzeichnet, dass** die Brechungsoptik (18) durch Linsen gebildet ist.

8. Leuchteinheit nach einem der vorhergehenden Ansprüche,
**dadurch gekennzeichnet, dass** zwei spiegelbildlich zueinander angeordnete LEDs (10, 11, 12, 13; 10a; 10b) vorgesehen sind, die Licht nach entgegengesetzten Richtungen abstrahlen.

9. Leuchteinheit nach einem der vorhergehenden Ansprüche,
**dadurch gekennzeichnet, dass** der Reflektor (3) wenigstens zwei nebeneinander liegende Reflektorteile (22) aufweist.

10. Leuchteinheit nach Anspruch 9,
**dadurch gekennzeichnet, dass** jeder Reflektorteil (22) zwei spiegelbildlich oder gleich zueinander angeordnete LEDs (10, 11, 12, 13; 10a; 10b) aufweist.

## Claims

1. A lighting unit, in particular as an additional indicator light in exterior rear-view mirrors of motor vehicles, comprising at least one LED (10, 11, 12, 13; 10a; 10b) and at least one reflector, which reflects the rays coming from the LED (10, 11, 12, 13; 10a; 10b) in the direction of a light disc, the LED (10, 11, 12, 13; 10a; 10b) comprising at least one fully reflective surface (14, 14a, 14b) at which the rays are reflected to the reflector (3), **characterised in that** the fully reflective surface (14, 14a, 14b) is located obliquely to the axis of the LED (10, 11, 12, 13; 10a; 10b) and the fully reflective surface (14a; 14b) is designed to be planar.

2. The lighting unit, in particular as an additional indicator light in external rear-view mirrors of motor vehicles, comprising at least one LED (10, 11, 12, 13; 10a; 10b) and at least one reflector, which reflects the rays coming from the LED (10, 11, 12, 13; 10a; 10b) in the direction of a light disc, the LED (10, 11, 12, 13; 10a; 10b) comprising at least one fully reflective surface (14, 14a, 14b) at which the rays are reflected to the reflector (3), **characterised in that** the fully reflective surface (14, 14a, 14b) is located obliquely to the axis of the LED (10, 11, 12, 13; 10a; 10b) and the fully reflective surface (14) is curved outwards in a convex manner.

3. The lighting unit according to Claim 1 or 2, **characterised in that** the reflective surface (14; 14a; 14b) has a reflective coating and/or mirror finish and/or consists of a reflective material.

4. The lighting unit according to Claim 1, 2 or 3, **characterised in that** the fully reflective surface (14, 14a, 14b) extends over part of the height of the LED (10, 11, 12, 13; 10a; 10b).

5. The lighting unit according to one of the preceding claims, **characterised in that** the fully reflective surface (14, 14a, 14b) reflects the rays transversely to the axis of the LED (10, 11, 12, 13; 10a; 10b).

6. The lighting unit according to one of the preceding claims, **characterised in that** the peripheral surface (16, 16b) of the lighting means (10, 11, 12, 13; 10a; 10b) is provided with refractive optics (18) in the region of where the rays which are reflected on the fully reflective surface (14; 14a; 14b) pass through said peripheral surface.

7. The lighting unit according to Claim 6, **characterised in that** the refractive optics (18) are formed by lenses.

8. The lighting unit according to one of the preceding claims, **characterised in that** two LEDs (10, 11, 12, 13; 10a; 10b) arranged mirror-symmetrically to one another are provided, which radiate light in opposing directions.

9. The lighting unit according to one of the preceding claims, **characterised in that** the reflector (3) has at least two reflector parts (22) located adjacent to one another.

10. The lighting unit according to Claim 9, **characterised in that** each reflector part (22) has two LEDs (10, 11, 12, 13; 10a; 10b) arranged mirror-symmetrically or identically to one another.

## Revendications

1. Unité d'éclairage, en particulier sous forme de clignotant supplémentaire dans des rétroviseurs extérieurs de véhicules, comprenant au moins une LED (10, 11, 12, 13; 10a; 10b) et au moins un réflecteur, qui réfléchit les rayons arrivant de 1a LED (10, 11, 12, 13; 10a; 10b) en direction d'un disque de lumière, la LED (10, 11, 12, 13; 10a; 10b) présentant au moins une surface (14, 14a, 14b) entièrement réfléchissante, sur laquelle les rayons allant au réflecteur (3) sont réfléchis,
**caractérisée en ce que** la surface (14, 14a, 14b) entièrement réfléchissante est disposée en biais par rapport à l'axe de la LED (10, 11, 12, 13; 10a; 10b) et la surface (14a; 14b) entièrement réfléchissante est conçue plane.

2. Unité d'éclairage, en particulier sous forme de clignotant supplémentaire dans des rétroviseurs extérieurs de véhicules, comprenant au moins une LED (10, 11, 12, 13; 10a; 10b) et au moins un réflecteur, qui réfléchit les rayons arrivant de la LED (10, 11, 12, 13; 10a; 10b) en direction d'un disque de lumière, la LED (10, 11, 12, 13; 10a; 10b) présentant au moins une surface (14, 14a, 14b) entièrement réfléchissante sur laquelle les rayons allant au réflecteur (3) sont réfléchis,
**caractérisée en ce que** la surface (14, 14a, 14b) entièrement réfléchissante est disposée en biais par rapport à l'axe de 1a LED (10, 11, 12, 13; 10a; 10b) et la surface (14) entièrement réfléchissante est incurvée de façon convexe vers l'extérieur.

3. Unité d'éclairage selon la revendication 1 ou 2, **caractérisé en ce que** la surface (14; 14a; 14b) entièrement réfléchissante présente un revêtement et/ou un tain antiréfléchissant et/ou est à base d'un matériau réfléchissant.

4. Unité d'éclairage selon la revendication 1, 2 ou 3,
**caractérisée en ce que** la surface (14; 14a; 14b) entièrement réfléchissante s'étend sur une partie de la hauteur de la LED (10, 11, 12, 13; 10a; 10b).

5. Unité d'éclairage selon l'une quelconque des revendications précédentes,
**caractérisée en ce que** la surface (14; 14a; 14b) entièrement réfléchissante réfléchit les rayons transversalement à l'axe de la LED (10, 11, 12, 13; 10a; 10b).

6. Unité d'éclairage selon l'une quelconque des revendications précédentes,
**caractérisée en ce que** la surface d'enveloppe (16, 16b) du moyen d'éclairage (10, 11, 12, 13; 10a; 10b) est doté d'une optique de réfraction (18) dans la zone des rayons passant à travers la surface d'enveloppe et réfléchis sur la surface (14; 14a; 14b) entièrement réfléchissante.

7. Unité d'éclairage selon la revendication 6,
**caractérisée en ce que** l'optique de réfraction (18) est formée par des lentilles.

8. Unité d'éclairage selon l'une quelconque des revendications précédentes,
**caractérisée en ce que** deux LEDs (10, 11, 12, 13; 10a; 10b) disposés de façon symétrique l'une par rapport à l'autre sont prévues, lesquelles diffusent de la lumière vers des directions opposées.

9. Unité d'éclairage selon l'une quelconque des revendications précédentes,
**caractérisée en ce que** le réflecteur (3) présente au moins deux parties de réflecteur (22) situées l'une à côté de l'autre.

10. Unité d'éclairage selon la revendication 9,
**caractérisée en ce que** chaque partie de réflecteur (22) présente deux LED (10, 11, 12, 13; 10a; 10b) disposés de façon symétrique ou identique l'une par rapport à l'autre.
